**Europäisches Patentamt**

**European Patent Office**

**Office européen des brevets**

(19)

(11) Veröffentlichungsnummer: **0 123 952**
**B1**

(12) # EUROPÄISCHE PATENTSCHRIFT

(45) Veröffentlichungstag der Patentschrift:
13.07.88

(51) Int. Cl.⁴: **C 23 C 4/02,** C 23 C 4/06

(21) Anmeldenummer: 84103673.4

(22) Anmeldetag: 04.04.84

(54) Verschleissfeste Beschichtung.

(30) Priorität: 29.04.83 DE 3315556

(43) Veröffentlichungstag der Anmeldung:
07.11.84 Patentblatt 84/45

(45) Bekanntmachung des Hinweises auf die Patenterteilung:
13.07.88 Patentblatt 88/28

(84) Benannte Vertragsstaaten:
DE FR GB IT SE

(56) Entgegenhaltungen:
EP - A - 0 075 228
EP - A - 0 112 453
EP - A - 0 114 232
WO - A - 82/01898
DE - A - 2 433 814
DE - C - 869 570
GB - A - 2 027 518
US - A - 3 091 548
US - A - 3 758 233
US - A - 4 095 005

PATENTS ABSTRACTS OF JAPAN, Band 7, Nr. 139
(C-171)(1284), 17. Juni 1983

(73) Patentinhaber: GOETZE AG,
Bürgermeister-Schmidt-Strasse 17,
D-5093 Burscheid 1 (DE)

(72) Erfinder: Neuhäuser, Hans Jochem, Dr., Hufer Weg 13,
D-5060 Bergisch-Gladbach 2 (DE)
Erfinder: Buran, Ulrich, Dipl.-Ing., Neuenhaus 26 a,
D-5093 Burscheid (DE)
Erfinder: Fischer, Manfred, Dr., Moltkestrasse 15 a,
D-5653 Leichlingen 1 (DE)

## Beschreibung

Die Erfindung betrifft eine verschleissfeste Beschichtung aus mehreren, radial übereinanderliegenden Schichten mit unterschiedlicher Porosität und/oder quantitativer Zusammensetzung, welche durch ein Flammspritzverfahren, wie bevorzugt durch ein Plasmaspritzverfahren, in überspritzter oder gekammerter Form auf die Laufflächen von auf reibenden Verschleiss beanspruchten Maschinenteilen, wie insbesondere auf die Laufflächen von Kolbenringen für Verbrennungskraftmaschinen, aufgetragen sind.

Zur Verbesserung der Lebensdauer von extremen Verschleissbelastungen ausgesetzten Maschinenteilen ist es üblich, diese mit im Flammspritzverfahren beziehungsweise Plasmaspritzverfahren aufgetragenen Verschleissschutzschichten aus bevorzugt Metallen, metallkeramischen Materialien und/oder rein keramischen Materialien zu überziehen. Auf den Laufflächen von Kolbenringen haben sich dabei vor allem durch ein Flammspritzverfahren aufgetragene Molybdänschichten beziehungsweise nach dem Plasmaspritzverfahren aufgetragene molybdänhaltige Schichten besonders bewährt, die auf die Laufflächen entweder ganzflächig in überspritzter Form oder in Nuten in gekammerter Form aufgetragen sind.

Bei extremen Belastungen von Kolbenringen, wie beispielsweise beim Trockenlauf im Schadensfall des Motors oder in modernen schnellaufenden Dieselmotoren insbesondere mit Turboaufladung, können in den Molybdänschichten als Folge von Überhitzungen Rissbildungen entstehen, die zu Schichtabschuppungen und Schichtausbrüchen führen. Deshalb werden schon vor allem Molybdänlegierungen oder andere Legierungen sowie keramische Werkstoffe mit oder ohne Zusatz an niedrigschmelzenden Legierungen oder intermetallischen Verbindungen als Bindemetall zur Beschichtung von Kolbenringen eingesetzt. Diese Massnahmen erbrachten jedoch nur zum Teil den gewünschten Erfolg.

Nach beispielsweise der EP-A-0 114 323 kann die Kolbenringbeschichtung homogen aus einer Spritzpulverzusammensetzung aus 20 bis 60 Gewichtsprozent Molybdän, 25 bis 50 Gewichtsprozent Molybdänkarbid und bis zu 30 Gewichtsprozent einer Bindemetallegierung hergestellt sein.

Nach der EP-A-0 112 453 wird zur Herstellung der Schichten ein Spritzpulver mit 50 bis 90 Gewichtsprozent Aluminium und 5 bis 40 Gewichtsprozent Titandioxid mit Zusätzen von 5 bis 30 Gewichtsprozent Lanthanoxid und/oder Nioboxid mit gegebenenfalls 30 Gewichtsprozent Calciumcarbonat verwendet, und nach der DE-A 2 433 814 wird ein Molybdänpulver mit zugemischtem oder zulegiertem Nickel, Eisen, Kobalt, Titan, Vanadium, Chrom, Aluminium, Wolfram, Tantal, Rhenium und/oder Zirkon eingesetzt.

Diese Spritzschichtwerkstoffe sind jedoch nicht universell zur Herstellung von Kolbenringbeschichtungen für alle Anwendungsfälle gleichermassen gut geeignet.

Nach der WO 82/01898 werden Spritzschichten auf Maschinenteilen, die in Verbrennungskraftmaschinen heissen, aggressiven Verbrennungsgasen ausgesetzt sind, wie vor allem Abgasventile oder Kolbenböden in schwerölbetriebenen Schiffsdieselmotoren, aus metallkeramischen Pulvern in Bindemetallen hergestellt. Zur Erzielung einer besonderen Heissgaskorrosionsbeständigkeit besteht dabei die Spritzschicht aus mehreren übereinanderliegenden Lagen, bei denen von innen nach aussen der metallkeramische Anteil zunimmt beziehungsweise entsprechend der Bindemetallgehalt abnimmt.

Beschichtungen auf den Laufflächen von reibendem Verschleiss ausgesetzten Maschinenteilen müssen nicht unbedingt besonders heissgaskorrosionsbeständig sein, sondern sie müssen ausser einer guten und temperaturfesten Haftung (Adhäsion) am Substrat und einer guten und temperaturfesten Bindung innerhalb der Schicht (Kohäsion) auch in mit dem Reibungspartner in Berührung stehenden Oberflächenbereich unter anderem brandspursicher und verschleissfest sein, sie sollen dort Poren zur Aufnahme von Schmiermitteln enthalten, beim Trockenlauf eine ausreichende Eigenschmierung besitzen und in der Einlaufphase soll ihr Eigenverschleiss zur Anpassung an die Gegenflächen ausreichen. Darüber hinaus sollen diese Schichten eine hohe Ausbruchsicherheit haben und auch nach langen Laufzeiten kein oder nur ein geringes Ermüdungsverhalten zeigen. Ebenso sollen, insbesondere bei gekammerten Spritzschichten, die thermischen Ausdehnungskoeffizienten des Substrats und des Schichtwerkstoffs einander angeglichen sein, damit Spannungsbildungen mit nachfolgenden Schichtausbrüchen im motorischen Betrieb nicht entstehen können. Die bisher entwickelten Legierungsschichten oder Keramikschichten weisen aber meist nicht alle diese Eigenschaften zugleich auf und Massnahmen, mit denen beispielsweise durch Hartmetallzusatz die Verschleissfestigkeit der Schichten gesteigert werden kann, führten andererseits wieder zu einem Nachlassen der Haftfestigkeit der Schichten am Substrat beziehungsweise der Schichteigenfestigkeit, so dass diese Schichten nicht ausbruchsicher und thermoschockempfindlich sind.

In der Beschichtungstechnik von Kolbenringen, wie beispielsweise beim galvanischen Hartchromauftrag, ist es üblich, Zwischenschichten zur Verbesserung der Hartchromschicht am Substrat einzusetzen oder die Oberflächen mit Weichmetallschichten zur Verbesserung des Einlaufverhaltens der Ringe zu versehen. Diese Massnahmen sind zwar vielfach wirkungsvoll, das Auftragen der Zwischen- und Einlaufschichten erfordert aber zusätzliche, die Kosten des Ringes verteuernde Verfahrensschritte und wegen der mangelnden Haftung der einzelnen Schichten untereinander, entstanden insbesondere bei extremen Belastungen ebenfalls Schäden.

Der vorliegenden Erfindung liegt daher die Aufgabe zugrunde, die Laufflächen von auf reibenden Verschleiss belasteten Maschinenteilen, und zwar insbesondere die Laufflächen von Kolbenringen, mit durch ein Flammspritzverfahren beziehungsweise vorwiegend Plasmaspritzverfahren aufgetragenen verschleissfesten Schichten zu versehen, die auch gegebenenfalls extremen Belastungen standhalten können. Das Verfahren der Herstellung der Schichten soll möglichst einfach und kostensparend sein, und vor allem soll es dem Fachmann ermöglichen, die verschleissfesten Beschichtungen mit auf den jeweiligen Anwendungsfall abgestimmten Eigenschaften herzustellen.

Erfindungsgemäss wird diese Aufgabe durch eine verschleissfeste Beschichtung aus mehreren übereinanderliegenden Spritzschichten unterschiedlicher Porosität und/oder quantitativer Zusammensetzung gelöst, die von innen nach aussen aus einer haftvermittelnden Schicht aus Bindemetall aus einer Molybdän-, einer Nickel-Chrom-Legierung, Nickel-Aluminium-Legierung und/oder einer Nickel-Chrom-Aluminium-Legierung und einer

1. Schicht 25% Mo, 50% $Mo_2C$ und/oder $Cr_3C_2$ und 25% Bindemetall,
2. Schicht 35% Mo, 40% $Mo_2C$ und/oder $Cr_3C_2$ und 25% Bindemetall,
3. Schicht 45% Mo, 30% $Mo_2C$ und/oder $Cr_3C_2$ und 25% Bindemetall,
4. Schicht 55% Mo, 20% $Mo_2C$ und/oder $Cr_3C_2$ und 25% Bindemetall und
5. Schicht 65% Mo, 10% $Mo_2C$ und/oder $Cr_3C_2$ und 25% Bindemetall

bestehen.

Eine weitere eingesetzte Spritzpulvermischung besteht aus Molybdänpulver, das in Mengenverhältnissen zwischen 20 und 40% variiert wird, aus Ferrochrompulver und/oder Chrompulver, das in Mengenverhältnissen zwischen 25 und 60% variiert wird sowie einem Bindemetall, das in Mengenverhältnissen zwischen 20 und 35% variiert wird. Eine mit diesem Spritzpulver hergestellte Beschichtung besteht dann von innen nach aussen aus

1. Schicht 20% Mo, 60% Ferrochrom und/oder Chrom, 20% Bindemetall
2. Schicht 30% Mo, 50% Ferrochrom und/oder Chrom, 20% Bindemetall
3. Schicht 40% Mo, 40% Ferrochrom und/oder Chrom, 20% Bindemetall
4. Schicht 50% Mo, 30% Ferrochrom und/oder Chrom, 20% Bindemetall
5. Schicht 60% Mo, 15% Ferrochrom und/oder Chrom, 25% Bindemetall

Eine weitere eingesetzte Spritzpulvermischung besteht aus Aluminiumoxid ($Al_2O_3$), das in Mengenverhältnissen zwischen 35 und 60% variiert wird, aus Titandioxid und/oder Titandioxid, das in Mengenverhältnissen zwischen 20 und 40% variiert wird, aus Lanthanoxid und/oder Nioboxid mit 20% Calciumkarbonat, das in Mengenverhältnissen zwischen 5 und 15% variiert wird sowie einem Bindemetall, das bis zu 30% enthalten sein kann. Eine mit diesem Spritzpulver hergestellte Beschichtung besteht dann von innen nach aussen aus

1. Schicht 55% $Al_2O_3$, 35% $TiO_2$ und 10% $La_2O_3$ und/oder $Nb_2O_5$ und $CaCo_3$
2. Schicht 40% $Al_2O_3$, 25% $TiO_2$ und 10% $La_2O_3$ und/oder $Nb_2O_5$ und $CaCo_3$ und 25% Bindemetall
3. Schicht 55% $Al_2O_3$, 35% $TiO_2$ und 10% $La_2O_3$ und/oder $Nb_2O_5$ und $CaCo_3$
4. Schicht 40% $Al_2O_3$, 25% $TiO_2$ und 10% $La_2O_3$ und/oder $Nb_2O_5$ und $CaCo_3$ und 25% Bindemetall
5. Schicht 55% $Al_2O_3$, 35% $TiO_2$ und 10% $La_2O_3$ und/oder $Nb_2O_5$ und $CaCo_3$

Im Sinne der Erfindung wird ferner vor dem Auftrag der verschleissfesten Beschichtung auf das Substrat eine haftverbessernde Schicht aufgetragen, die aus Molybdän, einer Nickel-Chrom-Legierung, einer Nickel-Aluminium-Legierung und/oder einer Nickel-Chrom-Aluminium-Legierung besteht.

Ebenso können die Spritzpulver intermetallische Verbindungen auf der Basis von Kobalt und/oder Nickel in Mengen bis zu 35% enthalten. Dem Spritzpulver können ferner bis zu 25% eines Festschmierstoffes aus bevorzugt Molybdändisulfid, Wolframdisulfid, Bornitrid, Calciumfluorid, Nickelgraphit und/oder PTFE enthalten. Ferner ist die Porosität der übereinanderliegenden Spritzschichten unterschiedlich, und zwar bevorzugt so, dass die Porosität von innen nach aussen stufenweise auf bis zu etwa 25% gesteigert ist.

Durch die Erfindung ist somit unter Verwendung der aus der EP-A-0 114 232, der EP-A-0 112 453 und der DE-A 2 433 814 bekannten Spritzpulverzusammensetzungen eine verschleissfeste Beschichtung geschaffen, deren physikalische Eigenschaften durch übereinanderliegende Spritzschichten unterschiedlicher Zusammensetzung optimal an die geforderten Belastungsverhältnisse angepasst sind. Bei der bevorzugten Verwendung eines qualitativ einheitlichen Spritzwerkstoffes, deren Mengenverhältnisse jedoch variiert sind, bestehen zwischen den einzelnen Spritzschichten untereinander keine besonderen Haftungsprobleme. Dadurch, dass die inneren am Substrat liegenden Spritzschichten in der Zusammensetzung so ausgewählt sind, dass sie eine gute Haftung zum Substrat gewährleisten, ist die Haftung der gesamten Beschichtung am Substrat auch bei extremen Belastungen unter Überhitzung optimal. Durch die Verwendung höherer Anteile an verschleissfesten Bestandteilen sowie die Verwendung höherer Anteile an Festschmierstoffen und die höhere Porosität der äusseren Spritzschichten, ist die gesamte Beschichtung zugleich verschleissfest und brandspursicher, sie gewährleistet einen guten Einlauf und gute Eigenschmierung für den Notfall.

Das Verfahren der Herstellung der verschleissfesten Beschichtung ist dabei relativ einfach und kostensparend. Der Auftrag kann mit mehreren, bevorzugt aber nur einer einzigen Spritzpistole, erfolgen, bei denen die Zuführmengen der einzelnen im Gemisch zu verspritzenden Komponenten automatisch und gegebenenfalls elektronisch gesteuert wird. Bei dem Auftragsverfahren kann der Fachmann auch bei Entwicklungsversuchen die Zuführmengen der einzelnen Komponenten nach seinen Überlegungen so variieren, dass er relativ einfach und schnell die optimale Zusammensetzung der Spritzschichten für den jeweiligen Anwendungsfall finden kann.

Die Erfindung wird anhand zweier Abbildungen näher erläutert, und zwar zeigt

Figur 1 den Querschnitt durch einen Kolbenring mit einer Beschichtung in überspritzter Form und

Figur 2 den Querschnitt durch einen Kolbenring mit einer Beschichtung in gekammerter Form.

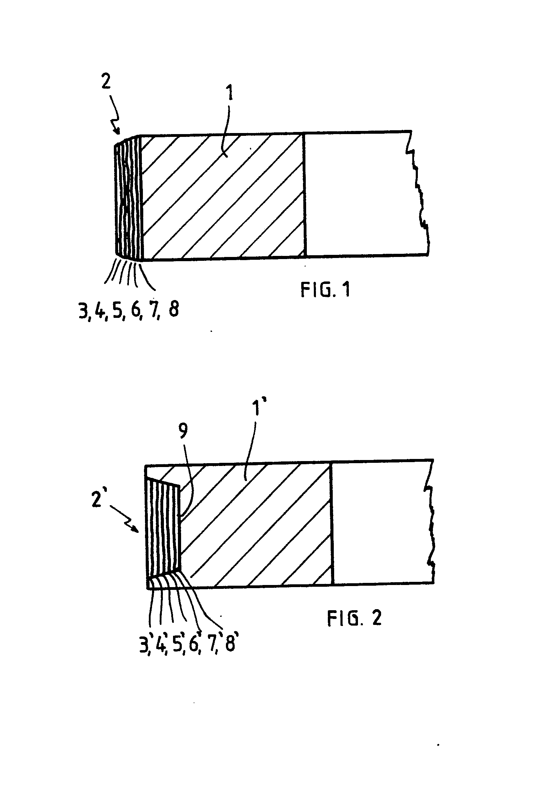

In Figur 1 ist 1 der Kolbenring mit einer Beschichtung 2 aus insgesamt sechs übereinanderliegenden Spritzschichten 3, 4, 5, 6, 7, 8 mit etwa gleich grosser Dicke.

In Figur 2 ist 1' der Kolbenring mit einer Kammer, die mit der verschleissfesten Beschichtung 2' aus den übereinanderliegenden Spritzschichten 3', 4', 5', 6', 7', 8' versehen ist.

## Patentansprüche

1. Verschleissfeste Beschichtung aus mehreren, radial übereinanderliegenden Schichten mit unterschiedlicher Porosität und/oder quantitativer Zusammensetzung, welche durch ein Flammspritzverfahren, wie bevorzugt durch ein Plasmaspritzverfahren, in überspritzter oder gekammerter Form auf die Laufflächen von auf reibenden Verschleiss beanspruchten Maschinenteilen, wie insbesondere auf die Laufflächen von Kolbenringen für Verbrennungskraftmaschinen, aufgetragen sind, dadurch gekennzeichnet, dass die Beschichtung (2) aus mehreren übereinanderliegenden Spritzschichten unterschiedlicher Porosität und/oder quantitativer Zusammensetzung besteht, die von innen nach aussen aus einer haftvermittelnden Schicht aus Bindemetall aus einer Molybdän-, einer Nickel-Chrom-Legierung, Nickel-Aluminium-Legierung und/oder einer Nickel-Chrom-Aluminium-Legierung und einer

1. Schicht 25% Mo, 50% $Mo_2C$ und/oder $Cr_3C_2$ und
       25% Bindemetall,
2. Schicht 35% Mo, 40% $Mo_2C$ und/oder $Cr_3C_2$ und
       25% Bindemetall,
3. Schicht 45% Mo, 30% $Mo_2C$ und/oder $Cr_3C_2$ und
       25% Bindemetall,
4. Schicht 55% Mo, 20% $Mo_2C$ und/oder $Cr_3C_2$ und
       25% Bindemetall und
5. Schicht 65% Mo, 10% $Mo_2C$ und/oder $Cr_3C_2$ und
       25% Bindemetall

bestehen.

2. Verschleissfeste Beschichtung aus mehreren, radial übereinanderliegenden Schichten mit unterschiedlicher Porosität und/oder quantitativer Zusammensetzung, welche durch ein Flammspritzverfahren, wie bevorzugt durch ein Plasmaspritzverfahren, in überspritzter oder gekammerter Form auf die Laufflächen von auf reibenden Verschleiss beanspruchten Maschinenteilen, wie insbesondere auf die Laufflächen von Kolbenringen für Verbrennungskraftmaschinen, aufgetragen sind, dadurch gekennzeichnet, dass die Beschichtung (2) aus mehreren übereinanderliegenden Spritzschichten unterschiedlicher Porosität und/oder quantitativer Zusammensetzung besteht, die von innen nach aussen aus einer haftvermittelnden Schicht aus Bindemetall aus einer Molybdän-, einer Nickel-Chrom-Legierung, Nickel-Aluminium-Legierung und/oder einer Nickel-Chrom-Aluminium-Legierung und einer

1. Schicht 20% Mo, 60% Ferrochrom und/oder
       Chrom,
       20% Bindemetall,
2. Schicht 30% Mo, 50% Ferrochrom und/oder
       Chrom,
       20% Bindemetall,
3. Schicht 40% Mo, 40% Ferrochrom und/oder
       Chrom,
       20% Bindemetall,
4. Schicht 50% Mo, 30% Ferrochrom und/oder
       Chrom,
       20% Bindemetall,
5. Schicht 60% Mo, 15% Ferrochrom und/oder
       Chrom,
       25% Bindemetall bestehen.

3. Verschleissfeste Beschichtung aus mehreren, radial übereinanderliegenden Schichten mit unterschiedlicher Porosität und/oder quantitativer Zusammensetzung, welche durch ein Flammspritzverfahren, wie bevorzugt durch ein Plasmaspritzverfahren, in überspritzter oder gekammerter Form auf die Laufflächen von auf reibenden Verschleiss beanspruchten Maschinenteilen, wie insbesondere auf die Laufflächen von Kolbenringen für Verbrennungskraftmaschinen, aufgetragen sind, dadurch gekennzeichnet, dass die Beschichtung (2) aus mehreren übereinanderliegenden Spritzschichten unterschiedlicher Porosität und/oder quantitativer Zusammensetzung besteht, die von innen nach aussen aus einer haftvermittelnden Schicht aus Bindemetall aus einer Molybdän-, einer Nickel-Chrom-Legierung, Nickel-Aluminium-Legierung und/oder einer Nickel-Chrom-Aluminium-Legierung und aus Spritzpulvermischungen gebildet sind, die aus 35 bis 60% $Al_2O_3$, 20 bis 40% $TiO_2$ und/oder Zirkondioxid, 5 bis 15% Lanthanoxid und/oder Nioboxid mit 20% Calciumkarbonat sowie bis zu 30% Bindemetall bestehen.

4. Verschleissfeste Beschichtung nach Anspruch 3, dadurch gekennzeichnet, dass die Beschichtung (2) aus mehreren übereinanderliegenden Spritzschichten unterschiedlicher Porosität und/oder quantitativer Zusammensetzung besteht, die von innen nach aussen aus einer haftvermittelnden Schicht aus Bindemetall aus einer Molybdän-, einer Nickel-Chrom-Legierung, Nickel-Aluminium-Legierung und/oder einer Nickel-Chrom-Aluminium-Legierung und aus nacheinander aufgetragenen Spritzpulvern mit

55% $Al_2O_3$, 35% $TiO_2$ und 10% $La_2O_3$ und/oder $Nb_2O_5$ + $CaCo_3$,
40% $Al_2O_3$, 25% $TiO_2$ und 10% $La_2O_3$ und/oder

$Nb_2O_5$ 5 $CaCo_3$ und 25% Bindemetall,
55% $Al_2O_3$, 35% $TiO_2$ und 10% $La_2O_3$ und/oder
$Nb_2O_5$ 5 $CaCo_3$,
40% $Al_2O_3$, 25% $TiO_2$ und 10% $La_2O_3$ und/oder
$Nb_2O_5$ + $CaCo_3$ und 25% Bindemetall,
55% $Al_2O_3$, 35% $TiO_2$ und 10% $La_2O_3$ und/oder
$Nb_2O_5$ + $CaCo_3$
zusammengesetzt sind.

## Claims

1. Wear-resistant coating of a plurality of radially superimposed layers with differing porosities and/or quantitative compositions, which are applied by a flame spraying method, especially a plasma spraying method, as a sprayed over or inset form on the running surfaces of machine parts subject to rubbing wear, especially on the running surfaces of piston rings for internal combustion engines, characterized in that the coating (2) consists of a plurality of superimposed sprayed layers of differing porosities and/or quantitative compositions, which from the inside to the outside consist of an adhesion-promoting layer of binder metal of a molybdenum, a nickel-chromium alloy, a nickel-aluminium alloy and/or a nickel-chromium-aluminium alloy, and a

1st layer 25% Mo, 50% $Mo_2C$ and/or $Cr_3C_2$ and 25% binder metal,

2nd layer 35% Mo, 40% $Mo_2C$ and/or $Cr_3C_2$ and 25% binder metal,

3rd layer 45% Mo, 30% $Mo_2C$ and/or $Cr_3C_2$ and 25% binder metal,

4th layer 55% Mo, 20% $Mo_2C$ and/or $Cr_3C_2$ and 25% binder metal, and

5th layer 65% Mo, 10% $Mo_2C$ and/or $Cr_3C_2$ and 25% binder metal.

2. Wear-resistant coating of a plurality of radially superimposed layers with differing porosities and/or quantitative compositions, which are applied by a flame spraying method, especially a plasma spraying method, as a sprayed over or inset form on the running surfaces of machine parts subject to rubbing wear, especially on the running surfaces of piston rings for internal combustion engines, characterized in that the coating (2) consists of a plurality of superimposed sprayed layers of differing porosities and/or quantitative compositions, which from the inside to the outside consist of an adhesion-promoting layer of binder metal of a molybdenum, a nickel-chromium alloy, a nickel-aluminium alloy and/or a nickel-chromium-aluminium alloy, and a

1st layer 20% Mo, 60% ferro-chromium and/or chromium, 20% binder metal,

2nd layer 35% Mo, 30% ferro-chromium and/or chromium, 20% binder metal,

3rd layer 40% Mo, 40% ferro-chromium and/or chromium, 20% binder metal,

4th layer 50% Mo, 30% ferro-chromium and/or chromium, 20% binder metal, and

5th layer 60% Mo, 15% ferro-chromium and/or chromium, 25% binder metal.

3. Wear-resistant coating of a plurality of radially superimposed layers with differing porosities and/or quantitative compositions, which are applied by a flame spraying method, especially a plasma spraying method, as a sprayed over or inset form on the running surfaces of machine parts subject to rubbing wear, especially on the running surfaces of piston rings for internal combustion engines, characterized in that the coating (2) consists of a plurality of superimposed sprayed layers of differing porosities and/or quantitative compositions, which from the inside to the outside consist of an adhesion-promoting layer of binder metal of a molybdenum, a nickel-chromium alloy, a nickel-aluminium alloy and/or a nickel-chromium-aluminium alloy, and are formed from spray-powder mixtures which consist of 35 to 60% $Al_2O_3$, 20 to 40% $TiO_2$ and/or zirconium dioxide, 5 to 15% lanthanum oxide and/or niobium oxide with 20% calcium carbonate, as well as up to 30% binder metal.

4. Wear-resistant coating according to claim 3, characterized in that the coating (2) consists of a plurality of superimposed sprayed layers of differing porosities and/or quantitative compositions, which from the inside to the outside consist of an adhesion-promoting layer of binder metal of a molybdenum, a nickel-chromium alloy, a nickel-aluminium alloy and/or a nickel-chromium-aluminium alloy, and sequentially applied spray-powders with

55% $Al_2O_3$, 35% $TiO_2$ and 10% $La_2O_3$ and/or $Nb_2O_5$ + $CaCO_3$,
40% $Al_2O_3$, 25% $TiO_2$ and 10% $La_2O_3$ and/or $Nb_2O_5$ + $CaCO_3$ and 25% binder metal,
55% $Al_2O_3$, 35% $TiO_2$ and 10% $La_2O_3$ and/or $Nb_2O_5$ + $CaCO_3$,
40% $Al_2O_3$, 25% $TiO_2$ and 10% $La_2O_3$ and/or $Nb_2O_5$ + $CaCO_3$ and 25% binder metal,
55% $Al_2O_3$, 35% $TiO_2$ and 10% $La_2O_3$ and/or $Nb_2O_5$ + $CaCO_3$.

## Revendications

1. Revêtement résistant à l'usure fait de plusieurs couches superposées radialement présentant des porosités et/ou des compositions quantitatives différentes, lesquelles couches sont appliquées sous forme de pulvérisation en surface ou sous forme de remplissage de creux par un procédé de projection de métal fondu, tel qu'avantageusement un procédé de pulvérisation à plasma, sur les portées de parties de machines sujettes à une usure due au frottement, comme en particulier, sur les portées des segments de piston pour les machines à combustion interne, caractérisé en ce que le revêtement (2) se compose de plusieurs couches pulvérisées superposées présentant des porosités et/ou des compositions quantitatives différentes et comprend, partant de l'intérieur et allant vers l'extérieur, une couche de pontage faite de métal de liaison fait d'un alliage de molybdène, d'un alliage de nickel-chrome, d'un alliage de nickel-aluminium et/ou d'un alliage de nickel-chrome-aluminium et d'une

1ère couche: 25% Mo, 50% $Mo_2C$ et/ou $Cr_3C_2$ et 25% de métal de liaison,
2ème couche: 35% Mo, 40% $Mo_2C$ et/ou $Cr_3C_2$ et 25% de métal de liaison,
3ème couche: 45% Mo, 30% $Mo_2C$ et/ou $Cr_3C_2$ et 25% de métal de liaison,
4ème couche: 55% Mo, 20% $Mo_2C$ et/ou $Cr_3C_2$ et 25% de métal de liaison,
5ème couche: 65% Mo, 10% $Mo_2C$ et/ou $Cr_3C_2$ et 25% de métal de liaison.

2. Revêtement résistant à l'usure fait de plusieurs couches superposées radialement présentant des porosités et/ou des compositions quantitatives différentes, lesquelles couches sont appliquées sous forme de pulvérisation en surface ou sous forme de remplissage de creux par un procédé de projection de métal fondu, tel qu'avantageusement un procédé de pulvérisation à plasma, sur les portées de parties de machines sujettes à une usure due au frottement, comme en particulier, sur les portées des segments de piston pour les machines à combustion interne, caractérisé en ce que le revêtement (2) se compose de plusieurs couches pulvérisées superposées présentant des porosités et/ou des compositions quantitatives différentes et comprend, partant de l'intérieur et allant vers l'extérieur, une couche de pontage faite de métal de liaison fait d'un alliage de molybdène, d'un alliage de nickel-chrome, d'un alliage de nickel-aluminium et/ou d'un alliage de nickel-chrome-aluminium et d'une

1ère couche: 20% Mo, 60% ferrochrome et/ou de chrome, 20% de métal de liaison,
2ème couche: 30% Mo, 50% de ferrochrome et/ou de chrome, 20% de métal de liaison,
3ème couche: 40% Mo, 40% de ferrochrome et/ou de chrome, 20% de métal de liaison,
4ème couche: 50% Mo, 30% de ferrochrome et/ou de chrome, 20% de métal de liaison,

5ème couche: 60% Mo, 15% de ferrochrome et/ou de chrome, 20% de métal de liaison.

3. Revêtement résistant à l'usure fait de plusieurs couches superposées radialement présentant des porosités et/ou des compositions quantitatives différentes, lesquelles couches sont appliquées sous forme de pulvérisation en surface ou sous forme de remplissage de creux par un procédé de projection de métal fondu, tel qu'avantageusement un procédé de pulvérisation à plasma, sur les portées de parties de machines sujettes à une usure due au frottement, comme en particulier, sur les portées des segments de piston pour les machines à combustion interne, caractérisé en ce que les couches sont formées de mélanges de poudre à pulvériser qui sont composées de 35 à 60% $Al_2O_3$, de 20 à 40% $TiO_2$ et/ou de dioxyde de zirconium, de 5 à 15% d'oxyde de lanthane et/ou d'oxyde de niobium avec 20% de carbonate de calcium, de même que de jusqu'à 30% d'un métal de liaison.

4. Revêtement résistant à l'usure selon la revendication 3, caractérisé en ce que le revêtement se compose de plusieurs couches pulvérisées superposées présentant des porosités et/ou des compositions quantitatives différentes, lequel comprend, partant de l'intérieur et allant vers l'extérieur, d'une couche de pontage faite de métal de liaison fait d'un alliage de molybdène, d'un alliage de nickel-chrome, d'un alliage de nickel-aluminium et/ou d'un alliage de nickel-chrome-aluminium et de poudres à pulvériser appliquées successivement, se composant de:
55% $Al_2O_3$, 35% $TiO_2$ et 10% $La_2O_3$ et/ou $Nb_2O_5$ et $CaCo_3$,
40% $Al_2O_3$, 25% $TiO_2$ et 10% $La_2O_3$ et/ou $Nb_2O_5$ et $CaCo_3$, et 25% de métal de liaison,
55% $Al_2O_3$, 35% $TiO_2$ et 10% $La_2O_3$ et/ou $Nb_2O_5$ et $CaCo_3$,
40% $Al_2O_3$, 25% $TiO_2$ et 10% $La_2O_3$ et/ou $Nb_2O_5$ et $CaCo_3$, et 25% de métal de liaison
55% $Al_2O_3$, 35% $TiO_2$ et 10% $La_2O_3$ et/ou $Nb_2O_5$ et $CaCo_3$.

FIG. 1

3, 4, 5, 6, 7, 8

FIG. 2

3, 4, 5, 6, 7, 8'